# EUROPEAN PATENT SPECIFICATION

(11) **EP 3 390 124 B1**
(45) Date of publication and mention of the grant of the patent: **07.10.2026**
(21) Application number: 16826711.0
(22) Date of filing: 19.12.2016
(51) Int. Cl.: B60G 17/0165

(54) **CONTROL UNIT FOR AN ACTIVE SUSPENSION SYSTEM**
STEUERUNGSEINHEIT FÜR EIN AKTIVES AUFHÄNGUNGSSYSTEM
UNITÉ DE COMMANDE POUR UN SYSTÈME DE SUSPENSION ACTIVE

(30) Priority: 18.12.2015 GB 201522355
(43) Date of publication of application: 24.10.2018
(73) Proprietor: Jaguar Land Rover Limited, Coventry, Warwickshire CV3 4LF (GB)
(72) Inventor: FICCA, Riccardo, Coventry Warwickshire CV3 4LF (GB); BEAN, Alex, Coventry Warwickshire CV3 4LF (GB)
(74) Representative: Jaguar Land Rover Patents Department
(86) International application number: PCT/EP2016/081687
(87) International publication number: WO 2017/103251

(56) References cited:
- DE-A1- 19 605 376
- GB-A- 2 494 415
- JP-A- 2010 202 052
- JP-A- 2011 183 919
- JP-A- 2015 147 486
- KR-A- 20040 006 903
- US-A- 5 322 319
- US-A- 5 347 457
- US-A1- 2013 103 259

## Description

### TECHNICAL FIELD

The present disclosure relates to a control unit for an active suspension system of a vehicle and particularly, but not exclusively, to a control unit and associated vehicle active suspension system configured to detect oncoming road features. Aspects of the invention relate to a control unit, to an active suspension system, to a method for controlling a vehicle suspension system, to a vehicle and to a computer program product.

### BACKGROUND

Various types of active suspension systems for vehicles are known in which suspension settings are adjustable to optimise the response of the suspension system for instantaneous driving conditions. This can enhance ride quality, and also enables the system to react to vehicle dynamics to improve handling.

For example, in adaptive suspension systems the damping coefficient of dampers of the system can be adjusted reactively to control the response of the suspension system to road conditions or vehicle dynamics. Adaptive systems typically react to significant changes in driving conditions to try to assure consistent vehicle behaviour/comfort. Changes in driving conditions may arise, for example, due to a change in road surface or due to driver inputs.

Fully active suspension systems add the ability to apply an independent force at one or more wheels of the vehicle to counteract forces generated by vehicle dynamics, for example during cornering. The force may be applied using a variety of actuator types, for example mechanical, hydraulic and electromagnetic actuators are all well-known.

Some active suspension systems also provide the ability to raise or lower the vehicle chassis or monocoque relative to each wheel independently, so as to vary the available suspension travel. For example, the available travel can be increased on a rough road surface to avoid the suspension 'bottoming', where the suspension members reach their limit of travel, in turn creating harsh vibration in the vehicle.

Active suspension systems are also known that incorporate a scanning system, such as a front mounted, forward facing camera, that is configured to scan the road ahead enabling suspension system settings to be adjusted according to detected surface features or terrain type. The adjustments may include varying suspension damping and/or changing the vehicle ride height.

Such arrangements have the drawback that the suspension settings are typically adjusted between discrete states, for example a 'hard' setting and a 'soft' setting. While this approach may be effective for adjusting a vehicle's suspension according to a terrain type over which the vehicle travels, such systems cannot provide a refined response to discrete surface features or unexpected surface profiles within that terrain type: either the suspension characteristics are unsuitable as the vehicle traverses a feature; or they are inappropriate for periods immediately before and after traversing the feature. Therefore overall ride quality is compromised.

It is an aim of the present invention to address disadvantages associated with the prior art.

In US5,347,457, a vehicular suspension control apparatus includes a selector valve for changing at least one of spring rigidity or damper rigidity of a suspension which is installed between a wheel and a body of a vehicle and extensibly and retractably supports the vehicle body on the wheel, a forward road surface sensor attached to the vehicle body and adapted to detect an irregularity of a road surface located in front of the vehicle body at a predetermined distance from the mounting position of the sensor when the vehicle body is in a predetermined attitude, a vehicle speed sensor for detecting a vehicle speed, and a controller for calculating a point of time when the wheel reaches the irregularity of the road surface, in accordance with the vehicle speed detected by the vehicle speed sensor, when the irregularity of the road surface is detected by the forward road surface sensor, and delivering a command signal for lowering at least one of the spring rigidity and the damper rigidity of the suspension to the selector valve by not later than the calculated time point..

### SUMMARY OF THE INVENTION

The scope of the invention is defined by the appended claims.

According to a first aspect, there is provided a vehicle comprising an active suspension system and a control unit for the active suspension system of the vehicle, the vehicle having a plurality of wheels, the control unit comprising: at least one input for receiving a signal comprising data related to the topography of terrain in a driving direction of the vehicle; at least one output for outputting a control signal for controlling one or more suspension system actuators associated with each wheel of the vehicle; and a processing module arranged to: analyse received data to identify a surface feature; determine, in dependence on a current vehicle state, a desired wheel displacement relative to a body of the vehicle for each wheel of the vehicle when any wheel of the vehicle negotiates the surface feature; determine a control signal for said one or more suspension system actuators of each wheel in dependence on each respective desired wheel displacement, wherein the control signal defines respective future adjustments to operation of the or each suspension system actuator that are scheduled to coincide with a time period for which one or more wheels of the vehicle negotiates the surface feature; and output the said control signal; wherein the control signal defines operation of a suspension system actuator that is operable to alter a position of one or more bump-stops associated with a respective one or more wheels of the vehicle.

The control unit may further comprise an electronic memory device electrically coupled to the processor and having instructions stored therein. The processing module may be configured to access the memory device and execute the instructions stored therein such that it is operable to: analyse said received data to identify said surface feature; determine, in dependence on said current vehicle state, said desired wheel displacement relative to said body of said vehicle for each of said one or more wheels when each said wheel negotiates the surface feature; and determine said control signal for said one or more suspension system actuators in dependence on said each respective desired wheel displacement.

It is noted that the displacement of a wheel relative to the vehicle body as a result of surface features is also known in the art as the wheel trajectory, and this latter term is used in the description that follows. The wheel displacement is determined at least for a period during which the wheel negotiates the surface feature, and so is typically not a single value, but instead a time-resolved function representing suspension deflection during that period.

By scheduling adjustments for operation of the or each suspension system actuator, the suspension system can be controlled dynamically so as to optimise its response to the identified surface feature. In other words, by accounting for the vehicle state, for example the vehicle speed, the adjustments can be scheduled to occur only while one or more wheels traverse the surface feature. This dynamic control in turn optimises ride quality and handling.

The processing module may comprise one or more electronic processors which may be hosted locally on a common device or distributed across two or more devices. The or each processor may be electrically coupled to one or more electronic memory devices. Where there is more than one processor, the processing module comprises suitable connections to enable communication between the processors. At least one processor of the processing module comprises an input for receiving data to be analysed, and at least one processor of the processing module comprises an output for outputting the control signal.

Adjustments to operation of a suspension actuator may include determining a force profile for a force actuator that is configured to exert an independent force within the suspension assembly to counteract loads imparted on the respective wheel by the terrain over which the wheel travels. Such an independent force can therefore be used to alter the trajectory of the wheel as it traverses surface features as required.

A surface feature may be a discrete feature such as a speed bump. Alternatively, the term surface feature is also intended to cover a continuous profile of the terrain in the direction of travel of the vehicle, enabling dynamic control to be applied. It is noted that if a continuous road profile is determined, corresponding continuous time-resolved wheel displacements for each wheel of the vehicle may be calculated.

It is noted that the adjustments for the operation of the one or more suspension system actuators can take into account interaction between the wheels of the vehicle. In particular, the adjustments to some wheels of the vehicle can be determined so as to counteract pitch or roll of the vehicle as a result of other wheels of the vehicle negotiating the surface feature.

It is also noted that by estimating the wheel trajectory, the control unit can provide an accurate and effective pre-emptive response to oncoming surface features in a manner that minimises the computing resources required, thereby providing an approach that is practical for use in a vehicle.

Identifying a surface feature may comprise determining a surface profile of the terrain in the driving direction; and/or wherein the processing module is configured to determine a respective time function for operation of the or each suspension system actuator, the or each time function defining the adjustments to operation of the or each suspension system actuator.

The control signal may define any one or more of the following: a magnitude of a force to be exerted by one of the suspension system actuators associated with each wheel of the vehicle; operation of a suspension system actuator that is operable to alter one or more ranges of travel of a respective one or more wheels of the vehicle; and operation of a suspension system actuator that is operable to alter one or more damping coefficients associated with a respective one or more wheels of the vehicle.

It is noted that the magnitude of a force to be exerted by one of the suspension system actuators may be determined, at least in part, to provide a desired range of travel in one or more wheels of the vehicle, and/or to adjust the position of an engagement point of a bump-stop.

The current vehicle state may comprise one or more of the group consisting of: vehicle speed; a speed of response of the suspension system; and instantaneous operating states for the or each suspension system actuator.

The processing module may be configured to determine, in dependence on the current vehicle state, a respective predicted wheel displacement for each wheel of the vehicle as one or more wheels of the vehicle negotiates the surface feature, and to compare each predicted wheel displacement with a respective one of the desired wheel trajectories, thereby to determine the adjustments to operation of the or each suspension system actuator.

The vehicle may further comprise a scanning module configured to output a signal comprising data related to the topography of terrain in a driving direction of the vehicle.

The scanning module may comprise a scanner which is configured to acquire data relating to the topography of the terrain in the driving direction. For example, the scanning module may comprise a vehicle-mounted camera. Alternatively, the scanning module may incorporate devices which use alternative scanning methods, such as LIDAR or ultrasound.

The scanning module may further comprise an electronic processor that is configured to process raw captured data into a suitable format to be output to the control unit. The processor may be electrically coupled to an electronic memory device. The scanning module may also comprise an output for outputting data to the control unit.

The vehicle may comprise a respective suspension assembly for each wheel of the vehicle, wherein the scanning module optionally comprises a vehicle-mounted camera, and wherein each suspension assembly optionally comprises any one or more of the following: a suspension system actuator that is operable to exert a force on the suspension assembly; a suspension system actuator that is operable to adjust a range of travel of the respective wheel; a bump-stop and a suspension system actuator that is operable to adjust an engagement point of the bump-stop; and a suspension system actuator that is operable to adjust a damping coefficient of the suspension assembly.

According to a second aspect, there is provided a method for controlling a suspension system of a vehicle having a plurality of wheels, the suspension system comprising one or more suspension system actuators associated with each wheel of the vehicle, the method comprising: scanning terrain in a driving direction of the vehicle to produce a signal comprising data related to the topography of the terrain in the driving direction; analysing the data to identify a surface feature in the driving direction; determining, in dependence on a current vehicle state, a desired wheel displacement relative to a body of the vehicle for each wheel of the vehicle when any wheel of the vehicle negotiates the surface feature; determining, in dependence on each respective desired wheel displacement, future adjustments to operation of the or each suspension system actuator of each wheel that are scheduled to coincide with a time period for which one or more wheels of the vehicle negotiates the surface feature; and applying the adjustments to operation of the or each suspension system actuator as one or more wheels of the vehicle negotiates the surface feature so as to provide the desired wheel displacement at each wheel of the vehicle, comprising adjusting operation of a suspension system actuator that is operable to alter an engagement point of one or more bump-stops associated with a respective one or more wheels of the vehicle.

The method may comprise determining a respective time function for operation of the or each suspension system actuator, the or each time function defining the adjustments to operation of the or each suspension system actuator.

The method may comprise adjusting a magnitude of a force to be exerted by a respective one of the suspension system actuators associated with each wheel of the vehicle.

The method may comprise adjusting operation of a suspension system actuator that is operable to alter: one or more ranges of travel of a respective one or more wheels of the vehicle; and/or one or more damping coefficients associated with a respective one or more wheels of the vehicle.

The method may comprise determining, in dependence on the current vehicle state, a respective predicted wheel displacement for each wheel of the vehicle as one or more wheels of the vehicle negotiates the surface feature, and comparing each predicted wheel displacement with a respective one of the desired wheel trajectories, thereby to determine the adjustments to apply to operation of the or each suspension system actuator; and wherein the current vehicle state optionally comprises one or more of the group consisting of: vehicle speed; a speed of response of the suspension system; and instantaneous operating states for the or each suspension system actuator.

It is noted that altering one or more ranges of travel of a respective one or more wheels, and/or altering an engagement point of one or more bump-stops associated with a respective one or more wheels of the vehicle may be achieved by adjusting the magnitude of a force to be exerted by one of the suspension system actuators.

According to a third aspect, there is provided a computer program product comprising instructions to cause the vehicle of the first aspect to execute the steps of the method of the second aspect.

For the purposes of this disclosure, it is to be understood that the control system described herein can comprise a control unit or computational device having one or more electronic processors. A vehicle and/or a system thereof may comprise a single control unit or electronic controller or alternatively different functions of the controller(s) may be embodied in, or hosted in, different control units or controllers. As used herein, the term "control unit" will be understood to include both a single control unit or controller and a plurality of control units or controllers collectively operating to provide the required control functionality. The term "module" is likewise intended to include either a single computational module performing a single or multiple functions or a plurality of computational modules performing separable functions. A set of instructions could be provided which, when executed, cause said controller(s) or control unit(s) or module(s) to implement the control techniques described herein (including the method(s) described below). The set of instructions may be embedded in one or more electronic processors, or alternatively, the set of instructions could be provided as software to be executed by one or more electronic processor(s). For example, a first controller may be implemented in software run on one or more electronic processors, and one or more other controllers may also be implemented in software run on or more electronic processors, optionally the same one or more processors as the first controller. It will be appreciated, however, that other arrangements are also useful, and therefore, the present invention is not intended to be limited to any particular arrangement. In any event, the set of instructions described above may be embedded in a computer-readable storage medium (e.g., a non-transitory storage medium) that may comprise any mechanism for storing information in a form readable by a machine or electronic processors/computational device, including, without limitation: a magnetic storage medium (e.g., floppy diskette); optical storage medium (e.g., CD-ROM); magneto optical storage medium; read only memory (ROM); random access memory (RAM); erasable programmable memory (e.g., EPROM and EEPROM); flash memory; or electrical or other types of medium for storing such information/instructions.

### BRIEF DESCRIPTION OF THE DRAWINGS

One or more examples of the invention will now be described, by way of example only, with reference to the accompanying drawings, in which:
Figure 1 is a perspective view of a vehicle including an active suspension system according to an example of the invention;
Figure 2a is a schematic drawing showing a suspension assembly of the active suspension system of Figure 1;
Figure 2b corresponds to Figure 2a but shows the suspension assembly in an extended configuration;
Figure 3 is a flow diagram showing a force calculation process according to an example of the invention for controlling an active suspension system; and
Figure 4 is a flow diagram showing a suspension work space calculation process according to an example of the invention.

### DETAILED DESCRIPTION

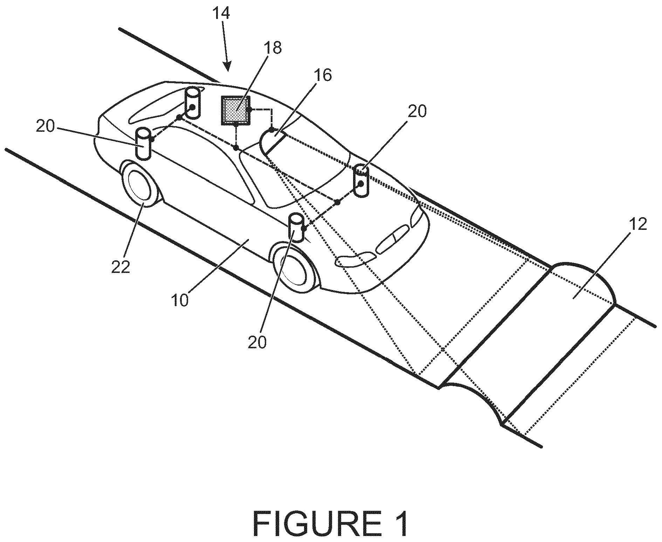

Figure 1 shows a vehicle 10 approaching a road surface feature 12, specifically a speed bump. The vehicle 10 is equipped with an active suspension system 14 according to an example of the invention, which is able to detect the road feature 12 in advance and apply adjustments to the suspension settings to optimise the response of the suspension system 14 to the road surface feature 12, thereby minimising the impact of the speed bump on the ride quality of the vehicle 10.

The active suspension system 14 comprises a scanning module 16 in the form of a front mounted, forward facing camera which scans an area of ground ahead of the vehicle 10 over which the vehicle 10 is about to travel to produce a signal containing scan data which is indicative of the topology of that area of ground, for example digital images. The scan data may include data indicative of the road profile, for example a road profile mesh or points cloud. A rear-facing camera may also be included for when the vehicle 10 travels in reverse. A camera forming part of a park-assist system could be used for this purpose, for example.

In this example, the scan data is relayed to a central control unit 18 of the suspension system 14 for processing to determine a surface profile of the ground ahead of the vehicle 10, from which surface features 12 such as speed bumps or potholes can be identified. In other examples, the scanning module 16 produces a signal indicative of the surface profile, and/or indicative of any surface features of the scanned area of ground, which requires minimal, if any, processing by the control unit 18.

The active suspension system 14 further includes a respective suspension assembly 20 for each wheel 22 of the vehicle 10. The suspension system 14 therefore provides independent suspension for each wheel 22 of the vehicle 10. Each suspension assembly 20 is controlled by the central control unit 18 to react to surface features 12 detected by the scanning module 16.

For convenience a similar camera to those used in the known systems referred to above may be used. The camera may be stereoscopic so as to provide enhance depth information. Alternatively, other suitable forms of scanning device may be used to detect road features 12, for example devices based on LIDAR or ultrasound measurements.

In one example, the scanning module 16 is capable of scanning an area of ground stretching up to 15m ahead of the vehicle 10 at normal vehicle speeds, and the scanning module 16 and the control unit 18 are configured to generate and process the scan data sufficiently quickly to allow time to make adjustments to the suspension settings as required. Making adjustments may include, for example, calculating and scheduling an appropriate force profile to apply to actuators configured to exert a force on a suspension assembly 20 of each wheel 22, as shall be explained.

The control unit 18 comprises an input that receives the scan data from the scanning module. The control unit 18 processes the data provided by the scanning module 16 to determine a surface profile of the ground ahead of the vehicle 10. This surface profile is used in turn to determine, based on a current vehicle state, a time-resolved wheel trajectory for each wheel 22 of the vehicle 10; that is, a displacement of each wheel 22 relative to a chassis of the vehicle 10 over time.

It is noted that each wheel trajectory is unique: for example, front wheels 22 encounter a given road feature 12 sooner than the rear wheels 22, and so this is reflected in the individual trajectories. Furthermore, a road surface may not be of uniform height widthwise, and so the wheels 22 of each side of the vehicle 10 may traverse a slightly different surface profile. This is particularly so in the case of potholes, which may only affect the wheels 22 of one side of the vehicle 10.

The system 14 is configured to estimate the trajectory to be imparted on each wheel 22 by its respective suspension assembly 20 as the wheel 22 traverses road features, i.e. the displacement of the wheel 22 relative to the chassis of the vehicle 10. In general, the system acts to alter each wheel trajectory to match the profile of the road over which the respective wheel 22 travels as closely as possible, because if the movement of the wheel 22 relative to the chassis mirrors the road profile, vertical movement of the chassis is minimised, therefore maximising vehicle stability and in turn ride quality. In other words, if the system 14 extends or compresses each suspension assembly 20 in phase with the road profile, the wheels 22 will not impart any vertical force on the road additional to the weight of the vehicle 10. In turn, the vehicle 10 will not experience variation in forces transmitted from the road, improving ride quality. This principle defines a respective desired wheel trajectory for each wheel 22. The suspension system 14 of this example adjusts the settings of the suspension assemblies 20 so as to match the desired wheel trajectory as closely as possible.

It is noted that there is a relationship between individual wheel trajectories and pitch of the vehicle 10. For example, if the front wheels 22 of the vehicle 10 encounter a speed bump, assuming the front suspension assemblies 20 are not able to compensate for the changing road profile perfectly, the front end of the vehicle 10 will rise in response to the speed bump. This in turn increases the load on the rear wheels 22, which compresses the rear suspension assemblies 20, causing the rear wheels 22 to take an upward trajectory towards the chassis 24. The rear end of the vehicle 10 therefore dips, which tends to increase pitch of the vehicle 10 during a period in which the front wheels 22 traverse the speed bump.

This illustrates that there are relationships between the wheel trajectories of each wheel 22. Accordingly, when a surface feature is detected, wheel trajectories for each wheel 22 of the vehicle 10 are determined for each time a wheel 22 of the vehicle 10 will encounter the feature.

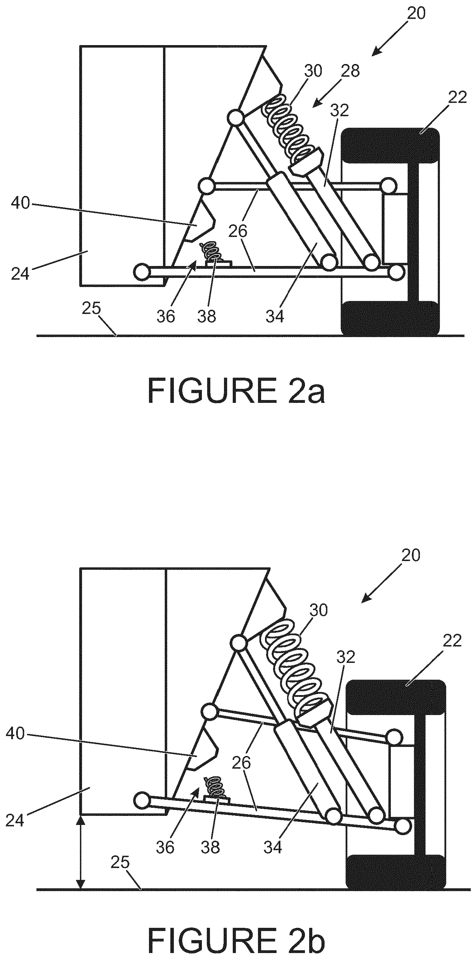

A possible configuration of the suspension assemblies 20 is shown in Figures 2a and 2b; Figure 2a shows the suspension assembly in a default configuration, and Figure 2b shows the assembly in an extended configuration. It should be noted that suspension architecture and the layout of individual suspension components can vary considerably between systems, and so the configuration shown in Figures 2a and 2b is representative only. For example, the suspension assemblies 20 may, for example, generally correspond to assemblies of conventional active suspension systems.

Broadly speaking, each suspension assembly 20 couples its respective wheel 22 to a chassis 24 of the vehicle 10 in a manner that provides both flexibility and damping. The flexibility allows a range of travel of the wheel 22 relative to the chassis 24, while the damping alters the effective stiffness of the assembly 20 to control the velocity of compression and range of extension of the assembly 20 in response to a load imparted on the wheel 22 by a road surface 25.

Specifically, in the example shown in Figure 2a each suspension assembly 20 includes a pair of parallel suspension arms 26 extending generally horizontally from the chassis 24 to support the respective wheel 22. The suspension arms 26 are pivotably fixed to the chassis 24 and to the wheel 22, thereby allowing the wheel 22 to move relative to the chassis 24. A spring assembly 28 is typically disposed between the lowermost suspension arm 26 and the chassis 24 to control the nature of movement of the wheel 22 relative to the chassis 24. The spring assembly 28 comprises a spring 30 in series with a damper 32. The spring 30 acts to increase resistance to movement of the wheel 22 relative to the chassis 24, thereby providing stiffness in the assembly, and the damper 32 provides damping.

A double-acting force actuator 34 is provided in parallel with the spring assembly 28 between the lower suspension arm 26 and the chassis 24. The force actuator 34 is configured to exert an independent active force between the lower suspension arm 26 and the chassis 24 so as to counteract loads imparted to the wheel 22 by the road surface 25 on which it travels, thereby influencing the wheel trajectory, i.e. displacement of the wheel 22 relative to the chassis 24 or vehicle body. The force may be positive, i.e. to push the wheel 22 away from the chassis 24, or negative, i.e. to pull the wheel 22 towards the chassis 24.

By controlling the force applied by the force actuator 34, the overall characteristics of the suspension assembly can be varied as required. This active force can be exerted for a variety of purposes: to control body motion relative to the wheels 22, pitch and heave and wheel position relative to the body. In this way, the suspension assembly 20 can be adapted to changing road conditions and surface features.

A bump-stop 36 is located near to the chassis 24 to limit the range of movement of the wheel 22 and to prevent metal-on-metal contact between components of the system 14. The bump-stop 36 is defined by a bump spring 38 attached to the lower suspension arm 26 and arranged to be engaged by a corresponding abutment feature 40 on the chassis 24 at a certain point of suspension compression travel, referred to hereafter as an engagement point.

A rest position of each suspension assembly 20 is defined where the force exerted by its spring assembly 28 balances the load experienced by the suspension assembly 20 due to the weight of the vehicle 10. The rest position can be altered if desired, for example to increase the range of suspension travel available, by using the force actuator 34 to supplement the force exerted by the spring assembly 28, and therefore alter the point at which the forces balance. This entails adjusting a nominal force of each force actuator 34, i.e. a default, baseline force that is applied when the associated wheel 22 is in its default rest position relative to the chassis 24, i.e. the configuration shown in Figure 2a. For example, if the nominal force applied to the actuator 34 is increased, causing the actuator 34 to extend, the lower suspension arm 26 will be urged to rotate clockwise - as viewed in Figures 2a and 2b - until the forces balance again, defining an extended configuration for the suspension assembly 20 in which it has a new rest position.

Figure 2b illustrates the result of altering the rest position by increasing the nominal force applied by the force actuator 34 such that the suspension assembly 20 adopts an extended configuration. As the lower suspension arm 26 is inclined relative to the road surface 25 such that its distal end is further away from the chassis 24 in the extended configuration, there is a greater range of movement available before the bump-stop engagement point is encountered.

It is noted that in practice increasing the suspension work space of a suspension assembly 20 entails raising or lowering the chassis 24 relative to each wheel 22, in turn adjusting the ride height of the vehicle 10. For example, Figure 2b shows that in the extended configuration the chassis 24 is higher relative to the road surface 25 than in the default configuration shown in Figure 2a.

It is also noted that there is not a single extended configuration for each suspension assembly 20; instead, each suspension assembly 20 is continuously adjustable within the working range of its force actuator 34 and the constraints of the geometry of the assembly 20 to adopt a variety of extended configurations as required.

Alternatively, or in addition, each suspension assembly 20 may include further actuators (not shown) that enable adjustments to be applied to the characteristics of the assembly, for example to vary the range of travel of the spring 30 of the spring assembly 28 or to adjust the range of travel of the wheel 22 relative to the chassis 24.

In other examples, any other suitable form of suspension may be used to provide the required flexibility and damping, including air suspension, hydraulic suspension and electromagnetic suspension.

Any suitable type of force actuator 34 may be used for supplying the independent force to each suspension assembly 20. For example, mechanical, hydraulic, pneumatic or electromagnetic actuators may be used.

The bump-stop shown in Figure 2a is conventional, but in other examples pneumatic, hydraulic or electromagnetic bump-stops may be used. Electronic bump-stops, or 'E-bump stops', are also known in which the suspension system 14 is configured to increase the force exerted by the force actuator 34 when suspension travel reaches a virtual engagement point, namely a point at which a physical bump-stop would be engaged, thereby emulating the effect of the bump-stop. This dispenses with the need to provide a separate bump-stop. Typically, the force applied by the force actuator 34 at the engagement point rises gradually, thereby emulating the effect of a physical bump-stop as closely as possible and minimising discomfort to occupants of the vehicle 10.

In another variant, an E-bump stop may operate on a principle of altering the resistance of the damper once the engagement point is reached, thereby emulating the function of a physical bump stop. For example, a hydraulic damper may be switched to a path of increased resistance when the engagement point is reached.

With any type of bump-stop, the point of engagement may be adjustable to account for the adjustment in the range of travel. For example, the engagement point may be moved to accommodate increased suspension travel.

The control unit 18 is operable to control each suspension assembly 20 independently. Therefore variables of the suspension system 14 including the force applied by the force actuator 34, the range of travel, the damping coefficient and, if appropriate, the effective position of the bump-stop 36 of each individual assembly 20 may be different. As shall be explained further in the description that follows, each suspension assembly 20 is optimised dynamically according to the individual projected trajectory of the wheel 22 to which the suspension assembly 20 is attached.

The control unit 18 may control the suspension assemblies indirectly by outputting a control signal that defines operation of the actuators of each assembly, to adjust the settings of each assembly as required. Alternatively, the control unit 18 may issue commands to control the actuators directly; although it is noted that such commands are a form of control signal.

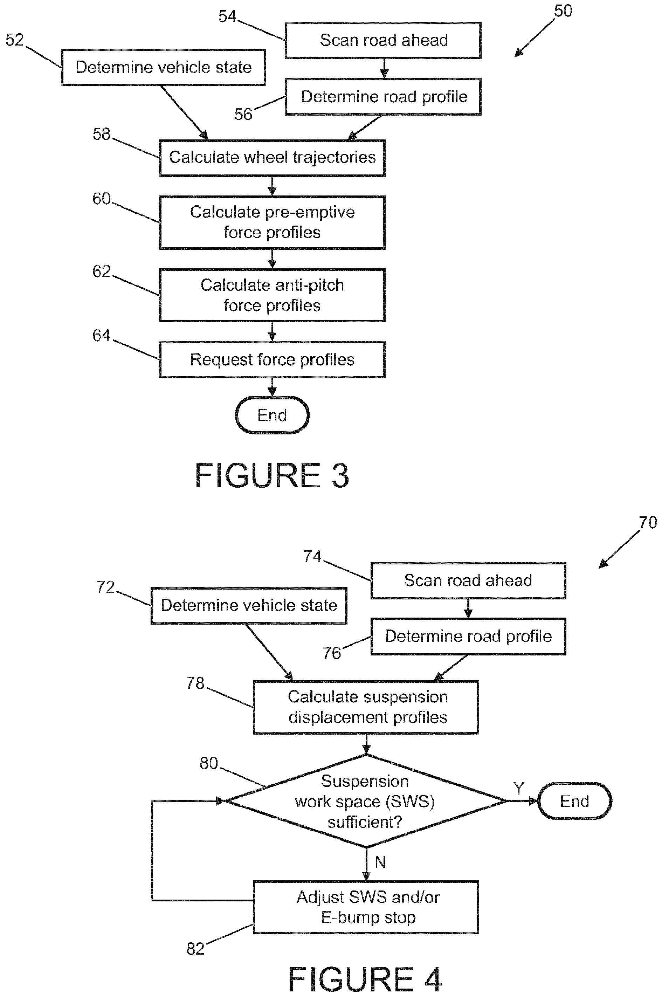

Figures 3 and 4 show a pair of parallel processes which the control unit 18 operates for controlling the active suspension system 14. Figure 3 relates to a force calculation process for controlling the independent force that is applied to each suspension assembly 20 by the force actuators 34, and Figure 4 relates to a suspension work space calculation process for adjusting the range of travel of each suspension assembly 20.

Referring firstly to Figure 3, the force calculation process 50 begins by performing at step 52 an assessment of the vehicle state and, in parallel, scanning at step 54 a portion of the road ahead of the vehicle 10 to determine at step 56 a surface profile for that portion of road, or 'terrain' if used when driving off-road.

The vehicle state includes: the speed of the vehicle 10; the present available range of suspension travel, herein referred to as the 'suspension work space' at each suspension assembly 20; the value of a stiffness parameter for each suspension assembly 20; the response speed of the suspension system 14; and the operating state of each actuator of the suspension assemblies, including the current force applied at each corner of the vehicle 10 by the force actuators 34. As shall be explained below, the vehicle state assessment includes a projected suspension work space and force profile at each corner of the vehicle 10 over a time period corresponding to the time taken to traverse the portion of road ahead of the vehicle 10 for which the surface profile is predicted.

By comparing the vehicle state with the predicted road surface profile at each wheel 22 of the vehicle 10, a force profile for each force actuator 34 to produce the desired wheel trajectories for each wheel 22 can be calculated at step 58. This is because each wheel trajectory is determined by the response of the respective suspension assembly 20 to the road profile, which is determined by the suspension settings.

As noted above, ideally the actual wheel trajectory should copy the road surface profile as closely as possible to minimise tire load variation at the point of contact between the tire and the road, in turn maintaining a constant load between the body and the suspension assemblies. This in turn minimises vertical movement of the vehicle body, thereby improving ride quality.

If the road surface profile varies only slightly and within normal limits, the default settings for the suspension system 14 will ensure that the suspension absorbs the variations and effectively isolates the vehicle 10 from the road. However, if the surface profile contains any sharp changes such as may be caused by features 12 such as bumps or potholes, if the suspension settings are maintained at their nominal levels the resulting wheel trajectories may deviate considerably from the desired wheel trajectory. It is noted that the wheel trajectories that would result if suspension settings are not altered from nominal or instantaneous levels while traversing a surface feature may be calculated, resulting in predicted wheel trajectories.

Therefore, in this example adjustments are only applied to the suspension settings by adjusting operation of the various actuators of those assemblies while one or more wheels 22 of the vehicle 10 negotiates the road feature 12; outside such periods, the settings are maintained at default levels in accordance with a selected vehicle mode, e.g. sport mode or off-road driving mode. However, in other examples the suspension settings may be adjusted continuously to match even the slightest variations in the road surface profile.

The control unit 18 then calculates at step 60 a pre-emptive force profile to apply to each suspension assembly 20 to suitably and anticipatorily counteract the effect of the varying height of the road surface 25 and so produce a desired wheel trajectory corresponding to the road surface profile. This entails adjusting the projected force profile that was to be applied to the suspension assemblies 20 according to the initial vehicle state assessment. The force profile therefore defines an open-loop control output that effects an increase or decrease in the force applied by the force actuator 34 relative to the nominal force at moments where the predicted wheel trajectory deviates from the desired wheel trajectory.

The effect of the pre-emptive force profile is to increase or decrease the magnitude of the force applied by the force actuator 34 of each assembly 20, and to define the direction of the force, i.e. positive or negative, continuously according to the predicted road surface profile to optimise the response of each assembly 20 at all times. The force profile therefore defines a time-function for the force applied by the force actuator 34 in question. Accordingly, at this stage the force profile for each suspension assembly 20 takes substantially the same form as the road surface profile, with peaks and troughs at the same points in time; although typically the force profile is a mirror image of the road profile, since the magnitude of the force typically decreases as the road height increases to reduce resistance to the upward trajectory of a wheel 22, and vice-versa.

In practice, the force profile may be slightly offset from the predicted road profile to account for the responsiveness of the suspension system, for example friction in the suspension assemblies 20, actuator speed of response and inertia.

The magnitude of the force applied by the force actuators 34 at each wheel 22 typically has a nominal value of zero, although in some examples the nominal value is non-zero where it is desirable for the actuators 34 to take some of the load of the vehicle at all times. Operation of the force actuators 34 can be adjusted to increase or decrease the force exerted from the nominal value as required to respond to the road surface profile. For example, as a wheel 22 approaches a speed bump the force at that wheel 22 remains at the nominal level until the instant at which the speed bump is reached, at which point the force is reduced so as to allow the wheel 22 to travel upwards more easily to accommodate the bump.

Accordingly, it will be understood that the force could become negative to assist the wheel 22 to move in an upward direction as it traverses the leading surface of the speed bump, and then become positive to assist the wheel 22 to travel downwards as it traverses the trailing edge of the speed bump. If a non-zero nominal force is applied by the force actuators, for example to adjust the suspension work space as described above, this regime is adjusted accordingly; for example, dropping the force towards zero once the wheel passes the peak of the speed bump may assist the wheel 22 to return to its rest position before returning the force to its non-zero nominal value.

It is noted that the magnitude of the force applied by a force actuator 34 is typically not changed instantaneously to avoid an abrupt release of energy stored in the spring 30 of the suspension assembly 20 to which the actuator 34 belongs, in particular when the spring is compressed after the respective wheel 22 climbs a leading surface. Instead, the force is adjusted gradually to allow the spring 30 to return to its rest position in a controlled manner.

As soon as the wheel 22 completes its descent of a trailing flank of the speed bump, the force returns to its nominal level. Therefore, in this example the force profile deviates from its nominal level only during periods in which one or more wheels 22 of the vehicle 10 negotiates the surface feature 12.

In other examples the force profile may vary continuously to copy the road surface profile. In either approach, the control unit acts to calculate the force profile to compress and extend the suspension spring assembly 28 in harmony with the desired wheel trajectory. Either approach sits in stark contrast with the known approaches described earlier in which a step-change in suspension settings is applied on detecting a road feature.

The pre-emptive force profile is effective in ensuring that each suspension assembly 20 responds in a tailored manner to road features 12. However, as noted above, this alone may not help to reduce pitch of the vehicle 10 as a result of such road features 12. Therefore, once the pre-emptive force profiles have been determined, the process 50 moves on to calculate at step 62 vehicle body anti-pitch force profiles which are superimposed on the pre-emptive force profiles. The anti-pitch force profiles are configured such that when one or more wheels 22 engage a road feature 12, the magnitudes of the forces applied at the suspension assemblies 20 of the remaining wheels 22 are adjusted to counteract pitch of the vehicle body.

For example, at the moment when the front wheels 22 engage a speed bump, the force applied at the rear suspension assemblies 20 can be increased temporarily to minimise pitch.

The pre-emptive and anti-pitch force profiles are then combined and applied at step 64 to the suspension assemblies 20, and the process 50 ends. The process 50 then typically begins again, and iterates continuously so as to provide dynamic prediction of and response to road features 12. Combining the two types of profile may entail a straightforward summing operation, or a more sophisticated operation may be used to optimise the combination of the pre-emptive and anti-pitch forces. It is noted that the force profiles calculated in each iteration of this process 50 will be taken into account in the following iteration when the vehicle state assessment is performed.

Turning now to the suspension work space calculation process 70 shown in Figure 4, this process 70 begins in the same way as the force calculation process 50 of Figure 3 by determining at step 72 the vehicle state simultaneously with using the scanning module 16 to scan at step 74 the road ahead, and using captured scan data to determine at step 76 the road profile. Using the vehicle state and road profile inputs, a required displacement profile for each suspension assembly 20 is calculated at step 78 to represent the displacement required over time to accommodate the oncoming road profile and to minimise engagement of the bump-stop 36 of the suspension assembly 20. Each displacement profile therefore defines a time-function for the displacement at each suspension assembly 20.

As for the force profile, in this example the displacement profile deviates from a nominal level only during periods in which one or more wheels 22 of the vehicle 10 negotiate a significant surface feature 12 such as a bump. In other examples the displacement profile may vary continuously to mirror the road surface profile.

The displacement profile for each suspension assembly 20 is then compared at step 80 with its current suspension work space to check that the suspension work space is sufficient. If so, the process 70 ends, and typically returns to the first step to re-assess the vehicle state and road profile. If not, the suspension work space is adjusted at step 82 with an appropriate increase so as to accommodate surface features that cannot be comfortably accommodated at the nominal level. In this example, the suspension work space is altered by increasing or decreasing the nominal value of the force applied by the force actuators 34 of each suspension assembly 20 as required.

If the suspension assembly 20 includes an adjustable bump-stop, the bump-stop engagement point is adjusted also at this stage if required to accommodate the increased suspension work space. The suspension workspace is then re-assessed to confirm that it is sufficient, and provided it is the process 70 then ends; otherwise, the suspension workspace is increased further until it is sufficient.

This process 70 iterates continuously and the work space is increased or decreased as required to accommodate features in the scanned portion of road ahead of the vehicle. Accordingly, the work space is returned to its nominal level whenever the scanning module does not detect a surface feature that cannot be accommodated comfortably, i.e. without compromising ride quality, at that level.

It is noted that as both processes 50, 70 outlined above share the initial steps of determining the vehicle state and the profile of the road ahead, in practice these initial steps may be performed by a subroutine that iterates continuously to provide real-time values which are made available to the processes 50, 70 of Figures 3 and 4 for the calculation of the forces and displacements to be applied by the control unit 18 to the suspension assemblies 20.

It is also noted that the forces and displacements of the suspension assemblies 20 are not independent of one another, in that the displacement is a function of force. For this reason the vehicle state assessment includes the projected force and displacement profiles as calculated by the processes shown in Figures 3 and 4. In this way, there is a level of feedback between the two processes which enables the overall suspension response to be refined.

Many modifications may be made to the above examples without departing from the scope of the present invention as defined in the accompanying claims. For example, the active suspension system 14 described above provides independent suspension for each wheel 22 of the vehicle 10. However, in other examples linked front suspension and rear suspension assemblies 20 may be used, in which case the front and rear suspensions are controlled separately to adjust the settings for each according to a predicted road profile.

Furthermore, in principle examples of the invention may be used with any suspension system based on active damper by providing suitable control coupled with means to scan the oncoming terrain.

Additionally, instead of a central control unit, the control unit may be implemented in a dispersed manner, for example with separate control modules performing dedicated tasks or controlling respective suspension assemblies.

## Claims

1. A vehicle (10) comprising an active suspension system (14) and a control unit (18) for the active suspension system (14) of the vehicle (10), the vehicle (10) having a plurality of wheels (22), the control unit (18) comprising:
at least one input for receiving a signal comprising data related to the topography of terrain in a driving direction of the vehicle (10);
at least one output for outputting a control signal for controlling one or more suspension system actuators (34) associated with each wheel (22) of the vehicle; and
a processing module arranged to:
analyse received data to identify a surface feature (12);
determine, in dependence on a current vehicle state, a desired wheel displacement relative to a body of the vehicle (10) for each wheel (22) of the vehicle when any wheel (22) of the vehicle negotiates the surface feature (12);
determine a control signal for said one or more suspension system actuators (34) of each wheel in dependence on each respective desired wheel displacement, wherein the control signal defines respective future adjustments to operation of the or each suspension system actuator (34) that are scheduled to coincide with a time period for which one or more wheels (22) of the vehicle (10) negotiates the surface feature (12); and
output the said control signal;
wherein the control signal defines operation of a suspension system actuator (34) that is operable to alter a position of one or more bump-stops (36) associated with a respective one or more wheels (22) of the vehicle (10).

2. The vehicle (10) of claim 1, wherein identifying a surface feature (12) comprises determining a surface profile of the terrain in the driving direction; and/or wherein the processing module is configured to determine a respective time function for operation of the or each suspension system actuator (34), the or each time function defining the adjustments to operation of the or each suspension system actuator (34).

3. The vehicle (10) of any preceding claim, wherein the control signal defines any one or more of the following: a magnitude of a force to be exerted by one of the suspension system actuators (34) associated with each wheel (22) of the vehicle (10); operation of a suspension system actuator (34) that is operable to alter one or more ranges of travel of a respective one or more wheels (22) of the vehicle (10); and operation of a suspension system actuator (34) that is operable to alter one or more damping coefficients associated with a respective one or more wheels (22) of the vehicle (10).

4. The vehicle (10) of any preceding claim, wherein the current vehicle state comprises one or more of the group consisting of: vehicle speed; a speed of response of the suspension system (14); and instantaneous operating states for the or each suspension system actuator (34).

5. The vehicle (10) of any preceding claim, wherein the processing module is configured to determine, in dependence on the current vehicle state, a respective predicted wheel displacement for each wheel (22) of the vehicle (10) as one or more wheels (22) of the vehicle (10) negotiates the surface feature (12), and to compare each predicted wheel displacement with a respective one of the desired wheel trajectories, thereby to determine the adjustments to operation of the or each suspension system actuator (34).

6. The vehicle according to any preceding claim further comprising:
a scanning module (16) configured to output a signal comprising data related to the topography of terrain in a driving direction of the vehicle (10).

7. The vehicle of claim 6, comprising a respective suspension assembly (20) for each wheel (22) of the vehicle (10), wherein the scanning module (16) optionally comprises a vehicle-mounted camera, and wherein each suspension assembly (20) optionally comprises any one or more of the following: a suspension system actuator (34) that is operable to exert a force on the suspension assembly (20); a suspension system actuator (34) that is operable to adjust a range of travel of the respective wheel (22); a bump-stop (36) and a suspension system actuator (34) that is operable to adjust an engagement point of the bump-stop (36); and a suspension system actuator (34) that is operable to adjust a damping coefficient of the suspension assembly (20).

8. A method for controlling a suspension system (14) of a vehicle (10) having a plurality of wheels (22), the suspension system (14) comprising one or more suspension system actuators (34) associated with each wheel of the vehicle, the method comprising:
scanning terrain in a driving direction of the vehicle (10) to produce a signal comprising data related to the topography of the terrain in the driving direction;
analysing the data to identify a surface feature (12) in the driving direction;
determining, in dependence on a current vehicle state, a desired wheel displacement relative to a body of the vehicle (10) for each wheel (22) of the vehicle when any wheel (22) of the vehicle negotiates the surface feature (12);
determining, in dependence on each respective desired wheel displacement, future adjustments to operation of the or each suspension system actuator (34) of each wheel that are scheduled to coincide with a time period for which one or more wheels (22) of the vehicle (10) negotiates the surface feature (12); and
applying the adjustments to operation of the or each suspension system actuator (34) as one or more wheels (22) of the vehicle (10) negotiates the surface feature (12) so as to provide the desired wheel displacement at each wheel (22) of the vehicle (10),
comprising adjusting operation of a suspension system actuator that is operable to alter an engagement point of one or more bump-stops (36) associated with a respective one or more wheels (22) of the vehicle (10).

9. The method of claim 8, wherein identifying a surface feature (12) comprises determining a surface profile of the terrain in the driving direction.

10. The method of claim 8 or claim 9, comprising determining a respective time function for operation of the or each suspension system actuator (34), the or each time function defining the adjustments to operation of the or each suspension system actuator (34).

11. The method of any of claims 8 to 10, comprising adjusting a magnitude of a force to be exerted by a respective one of the suspension system actuators (34) associated with each wheel (22) of the vehicle (10).

12. The method of any of claims 8 to 11, comprising adjusting operation of a suspension system actuator (34) that is operable to alter: one or more ranges of travel of a respective one or more wheels (22) of the vehicle (10); and/or one or more damping coefficients associated with a respective one or more wheels (22) of the vehicle (10).

13. The method of any of claims 8 to 12, comprising determining, in dependence on the current vehicle state, a respective predicted wheel displacement for each wheel (22) of the vehicle (10) as one or more wheels (22) of the vehicle (10) negotiates the surface feature (12), and comparing each predicted wheel displacement with a respective one of the desired wheel trajectories, thereby to determine the adjustments to apply to operation of the or each suspension system actuator (34); and wherein the current vehicle state optionally comprises one or more of the group consisting of: vehicle speed; a speed of response of the suspension system (14); and instantaneous operating states for the or each suspension system actuator (34).

14. A computer program product comprising instructions to cause the vehicle of any of claims 1 to 7 to execute the steps of the method of any of claims 8 to 13.

## Patentansprüche

1. Fahrzeug (10), umfassend ein System zur aktiven Federung (14) und eine Steuereinheit (18) für das System zur aktiven Federung (14) des Fahrzeugs (10), wobei das Fahrzeug (10) eine Vielzahl von Rädern (22) aufweist, wobei die Steuereinheit (18) umfasst:
mindestens einen Eingang zum Empfangen eines Signals, das Daten bezüglich der Topographie des Geländes in einer Fahrtrichtung des Fahrzeugs (10) umfasst;
mindestens einen Ausgang zum Ausgeben eines Steuersignals zum Steuern eines oder mehrerer Federsystemaktuatoren (34), die jedem Rad (22) des Fahrzeugs zugeordnet sind; und
ein Verarbeitungsmodul, das eingerichtet ist zum:
Analysieren empfangener Daten, um ein Oberflächenmerkmal (12) zu identifizieren;
Bestimmen, in Abhängigkeit von einem aktuellen Fahrzeugzustand, einer gewünschten Radverschiebung relativ zu einer Karosserie des Fahrzeugs (10) für jedes Rad (22) des Fahrzeugs, wenn ein beliebiges Rad (22) des Fahrzeugs das Oberflächenmerkmal (12) überfährt;
Bestimmen eines Steuersignals für den einen oder die mehreren Federsystemaktuatoren (34) jedes Rades in Abhängigkeit von jeder jeweiligen gewünschten Radverschiebung, wobei das Steuersignal jeweilige zukünftige Anpassungen des Betriebs des oder jedes Federsystemaktuators (34) definiert, die so geplant sind, dass sie mit einer Zeitspanne zusammenfallen, für die ein oder mehrere Räder (22) des Fahrzeugs (10) das Oberflächenmerkmal (12) überfahren; und
Ausgeben des Steuersignals;
wobei das Steuersignal den Betrieb eines Federsystemaktuators (34) definiert, der betreibbar ist, um eine Position eines oder mehrerer Anschlagpuffer (36) zu ändern, die jeweils einem oder mehreren Rädern (22) des Fahrzeugs (10) zugeordnet sind.

2. Fahrzeug (10) nach Anspruch 1, wobei das Identifizieren eines Oberflächenmerkmals (12) das Bestimmen eines Oberflächenprofils des Geländes in der Fahrtrichtung umfasst; und/oder wobei das Verarbeitungsmodul konfiguriert ist, um eine jeweilige Zeitfunktion für den Betrieb des oder jedes Federsystemaktuators (34) zu bestimmen, wobei die oder jede Zeitfunktion die Anpassungen des Betriebs des oder jedes Federsystemaktuators (34) definiert.

3. Fahrzeug (10) nach einem der vorstehenden Ansprüche, wobei das Steuersignal eines oder mehrere der Folgenden definiert: einen Betrag einer Kraft, die von einem der Federsystemaktuatoren (34), die jedem Rad (22) des Fahrzeugs (10) zugeordnet sind, auszuüben ist; Betrieb eines Federsystemaktuators (34), der betreibbar ist, um einen oder mehrere Bewegungsbereiche eines oder mehrerer jeweiliger Räder (22) des Fahrzeugs (10) zu ändern; und der Betrieb eines Federsystemaktuators (34), der betreibbar ist, um einen oder mehrere Dämpfungskoeffizienten zu ändern, die jeweils einem oder mehreren Rädern (22) des Fahrzeugs (10) zugeordnet sind.

4. Fahrzeug (10) nach einem der vorstehenden Ansprüche, wobei der aktuelle Fahrzeugzustand eines oder mehrere aus der Gruppe umfasst, bestehend aus: Fahrzeuggeschwindigkeit; Ansprechgeschwindigkeit des Federsystems (14); und momentane Betriebszustände für den oder jeden Federsystemaktuator (34).

5. Fahrzeug (10) nach einem der vorstehenden Ansprüche, wobei das Verarbeitungsmodul konfiguriert ist, um in Abhängigkeit von dem aktuellen Fahrzeugzustand eine jeweilige vorhergesagte Radverschiebung für jedes Rad (22) des Fahrzeugs (10) zu bestimmen, während ein oder mehrere Räder (22) des Fahrzeugs (10) das Oberflächenmerkmal (12) überfahren, und um jede vorhergesagte Radverschiebung mit einer jeweiligen der gewünschten Radtrajektorien zu vergleichen, um dadurch die Anpassungen des Betriebs des oder jedes Federsystemaktuators (34) zu bestimmen.

6. Fahrzeug nach einem der vorstehenden Ansprüche, ferner umfassend:
ein Abtastmodul (16), das konfiguriert ist, um ein Signal auszugeben, das Daten umfasst, die sich auf die Topographie des Geländes in einer Fahrtrichtung des Fahrzeugs (10) beziehen.

7. Fahrzeug nach Anspruch 6, umfassend eine jeweilige Federanordnung (20) für jedes Rad (22) des Fahrzeugs (10), wobei das Abtastmodul (16) optional eine am Fahrzeug montierte Kamera umfasst, und wobei jede Federanordnung (20) optional eines oder mehrere der Folgenden umfasst: einen Federsystemaktuator (34), der betreibbar ist, um eine Kraft auf die Federanordnung (20) auszuüben; einen Federsystemaktuator (34), der betreibbar ist, um einen Bewegungsbereich des jeweiligen Rades (22) anzupassen; einen Anschlagpuffer (36) und einen Federsystemaktuator (34), der betreibbar ist, um einen Eingriffspunkt des Anschlagpuffers (36) anzupassen; und einen Federsystemaktuator (34), der betreibbar ist, um einen Dämpfungskoeffizienten der Federanordnung (20) anzupassen.

8. Verfahren zum Steuern eines Federsystems (14) eines Fahrzeugs (10) mit einer Vielzahl von Rädern (22), wobei das Federsystem (14) einen oder mehrere Federsystemaktuatoren (34) umfasst, die jedem Rad des Fahrzeugs zugeordnet sind, wobei das Verfahren umfasst:
Abtasten von Gelände in einer Fahrtrichtung des Fahrzeugs (10), um ein Signal zu erzeugen, das Daten bezüglich der Topographie des Geländes in der Fahrtrichtung umfasst;
Analysieren der Daten, um ein Oberflächenmerkmal (12) in Fahrtrichtung zu identifizieren;
Bestimmen, in Abhängigkeit von einem aktuellen Fahrzeugzustand, einer gewünschten Radverschiebung relativ zu einer Karosserie des Fahrzeugs (10) für jedes Rad (22) des Fahrzeugs, wenn ein beliebiges Rad (22) des Fahrzeugs das Oberflächenmerkmal (12) überfährt;
Bestimmen, in Abhängigkeit von jeder jeweiligen gewünschten Radverschiebung, zukünftiger Anpassungen des Betriebs des oder jedes Federsystemaktuators (34) jedes Rades, die so geplant sind, dass sie mit einer Zeitspanne zusammenfallen, für die ein oder mehrere Räder (22) des Fahrzeugs (10) das Oberflächenmerkmal (12) überfahren; und
Anwenden der Anpassungen auf den Betrieb des oder jedes Federsystemaktuators (34), wenn ein oder mehrere Räder (22) des Fahrzeugs (10) das Oberflächenmerkmal (12) überfahren, um die gewünschte Radverschiebung an jedem Rad (22) des Fahrzeugs (10) bereitzustellen,
umfassend das Anpassen des Betriebs eines Federsystemaktuators, der betreibbar ist, um einen Eingriffspunkt eines oder mehrerer Anschlagpuffer (36) zu ändern, die jeweils einem oder mehreren Rädern (22) des Fahrzeugs (10) zugeordnet sind.

9. Verfahren nach Anspruch 8, wobei das Identifizieren eines Oberflächenmerkmals (12) das Bestimmen eines Oberflächenprofils des Geländes in der Fahrtrichtung umfasst.

10. Verfahren nach Anspruch 8 oder 9, umfassend das Bestimmen einer jeweiligen Zeitfunktion für den Betrieb des oder jedes Federsystemaktuators (34), wobei die oder jede Zeitfunktion die Anpassungen des Betriebs des oder jedes Federsystemaktuators (34) definiert.

11. Verfahren nach einem der Ansprüche 8 bis 10, umfassend das Anpassen einer Größe einer Kraft, die durch einen jeweiligen der Federsystemaktuatoren (34) auszuüben ist, der jedem Rad (22) des Fahrzeugs (10) zugeordnet ist.

12. Verfahren nach einem der Ansprüche 8 bis 11, umfassend das Anpassen des Betriebs eines Federsystemaktuators (34), der betreibbar ist, um Folgendes zu ändern: einen oder mehrere Bewegungsbereiche eines jeweiligen oder mehrerer Räder (22) des Fahrzeugs (10); und/oder einen oder mehrere Dämpfungskoeffizienten, die jeweils einem oder mehreren Rädern (22) des Fahrzeugs (10) zugeordnet sind.

13. Verfahren nach einem der Ansprüche 8 bis 12, umfassend das Bestimmen, in Abhängigkeit von dem aktuellen Fahrzeugzustand, einer jeweiligen vorhergesagten Radverschiebung für jedes Rad (22) des Fahrzeugs (10), während ein oder mehrere Räder (22) des Fahrzeugs (10) das Oberflächenmerkmal (12) überfahren, und das Vergleichen jeder vorhergesagten Radverschiebung mit einer jeweiligen der gewünschten Radtrajektorien, um dadurch die Anpassungen zu bestimmen, die auf den Betrieb des oder jedes Federsystemaktuators (34) anzuwenden sind; und wobei der aktuelle Fahrzeugzustand optional eines oder mehrere aus der Gruppe umfasst, bestehend aus: Fahrzeuggeschwindigkeit; Ansprechgeschwindigkeit des Federsystems (14); und momentane Betriebszustände für den oder jeden Federsystemaktuator (34).

14. Computer-Programm-Produkt, umfassend Anweisungen, um das Fahrzeug nach einem der Ansprüche 1 bis 7 zu veranlassen, die Schritte des Verfahrens nach einem der Ansprüche 8 bis 13 auszuführen.

## Revendications

1. Véhicule (10) comprenant un système de suspension active (14) et une unité de commande (18) pour le système de suspension active (14) du véhicule (10), le véhicule (10) ayant une pluralité de roues (22), l'unité de commande (18) comprenant :
au moins une entrée pour recevoir un signal comprenant des données relatives à la topographie du terrain dans une direction de conduite du véhicule (10) ;
au moins une sortie pour produire en sortie un signal de commande pour commander un ou plusieurs actionneurs de système de suspension (34) associés à chaque roue (22) du véhicule ; et
un module de traitement conçu pour :
analyser des données reçues afin d'identifier une caractéristique de surface (12) ;
déterminer, en fonction d'un état actuel du véhicule, un déplacement de roue souhaité par rapport à une carrosserie du véhicule (10) pour chaque roue (22) du véhicule lorsqu'une roue (22) quelconque du véhicule négocie la caractéristique de surface (12) ;
déterminer un signal de commande pour ledit ou lesdits actionneurs de système de suspension (34) de chaque roue en fonction de chaque déplacement de roue souhaité respectif, dans lequel le signal de commande définit des réglages futurs respectifs du fonctionnement de l'actionneur ou de chaque actionneur de système de suspension (34) qui sont programmés pour coïncider avec une période de temps pendant laquelle une ou plusieurs roues (22) du véhicule (10) négocient la caractéristique de surface (12) ; et
produire en sortie ledit signal de commande ;
dans lequel le signal de commande définit le fonctionnement d'un actionneur de système de suspension (34) qui sert à modifier une position d'une ou plusieurs butées de suspension (36) associées à une ou plusieurs roues (22) respectives du véhicule (10).

2. Véhicule (10) selon la revendication 1, dans lequel l'identification d'une caractéristique de surface (12) comprend la détermination d'un profil de surface du terrain dans la direction de conduite ; et/ou dans lequel le module de traitement est configuré pour déterminer une fonction temporelle respective pour le fonctionnement de l'actionneur ou de chaque actionneur de système de suspension (34), la ou chaque fonction temporelle définissant les réglages du fonctionnement de l'actionneur ou de chaque actionneur de système de suspension (34).

3. Véhicule (10) selon l'une quelconque revendication précédente, dans lequel le signal de commande définit l'un quelconque ou plusieurs des éléments suivants : une intensité d'une force devant être exercée par l'un des actionneurs de système de suspension (34) associés à chaque roue (22) du véhicule (10) ; le fonctionnement d'un actionneur de système de suspension (34) qui sert à modifier une ou plusieurs plages de débattement d'une ou plusieurs roues (22) respectives du véhicule (10) ; et le fonctionnement d'un actionneur de système de suspension (34) qui sert à modifier un ou plusieurs coefficients d'amortissement associés à une ou plusieurs roues (22) respectives du véhicule (10).

4. Véhicule (10) selon l'une quelconque revendication précédente, dans lequel l'état actuel du véhicule comprend un ou plusieurs états du groupe constitué par : la vitesse du véhicule ; une vitesse de réponse du système de suspension (14) ; et des états de fonctionnement instantanés pour le ou chaque actionneur de système de suspension (34).

5. Véhicule (10) selon l'une quelconque revendication précédente, dans lequel le module de traitement est configuré pour déterminer, en fonction de l'état actuel du véhicule, un déplacement de roue prédit respectif pour chaque roue (22) du véhicule (10) lorsqu'une ou plusieurs roues (22) du véhicule (10) négocient la caractéristique de surface (12), et pour comparer chaque déplacement de roue prédit avec une trajectoire respective des trajectoires de roue souhaitées, afin de déterminer de ce fait les réglages du fonctionnement de l'actionneur ou de chaque actionneur de système de suspension (34).

6. Véhicule selon l'une quelconque revendication précédente, comprenant en outre :
un module de balayage (16) configuré pour produire en sortie un signal comprenant des données relatives à la topographie du terrain dans une direction de déplacement du véhicule (10).

7. Véhicule selon la revendication 6, comprenant un ensemble de suspension (20) respectif pour chaque roue (22) du véhicule (10), dans lequel le module de balayage (16) comprend facultativement une caméra montée sur le véhicule, et dans lequel chaque ensemble de suspension (20) comprend facultativement l'un quelconque ou plusieurs des éléments suivants : un actionneur de système de suspension (34) qui sert à exercer une force sur l'ensemble de suspension (20) ; un actionneur de système de suspension (34) qui sert à régler une plage de débattement de la roue (22) respective ; une butée de suspension (36) et un actionneur de système de suspension (34) qui sert à régler un point d'engagement de la butée de suspension (36) ; et un actionneur de système de suspension (34) qui sert à régler un coefficient d'amortissement de l'ensemble de suspension (20).

8. Procédé permettant de commander un système de suspension (14) d'un véhicule (10) ayant une pluralité de roues (22), le système de suspension (14) comprenant un ou plusieurs actionneurs de système de suspension (34) associés à chaque roue du véhicule, le procédé comprenant :
le balayage du terrain dans une direction de conduite du véhicule (10) pour produire un signal comprenant des données relatives à la topographie du terrain dans la direction de conduite ;
l'analyse des données pour identifier une caractéristique de surface (12) dans la direction de conduite ;
la détermination, en fonction d'un état actuel du véhicule, d'un déplacement de roue souhaité par rapport à une carrosserie du véhicule (10) pour chaque roue (22) du véhicule lorsqu'une quelconque roue (22) du véhicule négocie la caractéristique de surface (12) ;
la détermination, en fonction de chaque déplacement de roue souhaité respectif, de réglages futurs du fonctionnement de l'actionneur ou de chaque actionneur de système de suspension (34) de chaque roue qui sont programmés pour coïncider avec une période de temps pendant laquelle une ou plusieurs roues (22) du véhicule (10) négocient la caractéristique de surface (12) ; et
l'application des réglages du fonctionnement de l'actionneur ou de chaque actionneur de système de suspension (34) lorsqu'une ou plusieurs roues (22) du véhicule (10) négocient la caractéristique de surface (12) de manière à fournir le déplacement de roue souhaité au niveau de chaque roue (22) du véhicule (10),
comprenant le réglage du fonctionnement d'un actionneur de système de suspension qui sert à modifier un point d'engagement d'une ou plusieurs butées de suspension (36) associées à une ou plusieurs roues (22) respectives du véhicule (10).

9. Procédé selon la revendication 8, dans lequel l'identification d'une caractéristique de surface (12) comprend la détermination d'un profil de surface du terrain dans la direction de conduite.

10. Procédé selon la revendication 8 ou la revendication 9, comprenant la détermination d'une fonction temporelle respective pour le fonctionnement de l'actionneur ou de chaque actionneur de système de suspension (34), la ou chaque fonction temporelle définissant les réglages du fonctionnement de l'actionneur ou de chaque actionneur de système de suspension (34).

11. Procédé selon l'une quelconque des revendications 8 à 10, comprenant le réglage d'une intensité d'une force devant être exercée par un actionneur respectif des actionneurs de système de suspension (34) associés à chaque roue (22) du véhicule (10).

12. Procédé selon l'une quelconque des revendications 8 à 11, comprenant le réglage du fonctionnement d'un actionneur de système de suspension (34) qui sert à modifier : une ou plusieurs plages de débattement d'une ou plusieurs roues (22) respectives du véhicule (10) ; et/ou un ou plusieurs coefficients d'amortissement associés à une ou plusieurs roues (22) respectives du véhicule (10).

13. Procédé selon l'une quelconque des revendications 8 à 12, comprenant la détermination, en fonction de l'état actuel du véhicule, d'un déplacement de roue prédit respectif pour chaque roue (22) du véhicule (10) lorsqu'une ou plusieurs roues (22) du véhicule (10) négocient la caractéristique de surface (12), et la comparaison de chaque déplacement de roue prédit avec une trajectoire respective des trajectoires de roue souhaitées, pour déterminer de ce fait les réglages à appliquer au fonctionnement du ou de chaque actionneur de système de suspension (34) ; et dans lequel l'état actuel du véhicule comprend facultativement un ou plusieurs états du groupe constitué par : la vitesse du véhicule ; une vitesse de réponse du système de suspension (14) ; et des états de fonctionnement instantanés pour le ou chaque actionneur de système de suspension (34).

14. Produit programme d'ordinateur comprenant des instructions pour amener le véhicule selon l'une quelconque des revendications 1 à 7 à exécuter les étapes du procédé selon l'une quelconque des revendications 8 à 13.
